# EUROPÄISCHE PATENTANMELDUNG

(11) **EP 1 632 377 A2**
(43) Veröffentlichungstag der Anmeldung: **08.03.2006**
(21) Anmeldenummer: 05450142.4
(22) Anmeldetag: 25.08.2005
(51) Int. Cl.: B60J 11/00

(54) **Schutzhülle für Objekte, insbesondere für Fahrzeuge**

(30) Priorität: 02.09.2004 AT 14662004
(71) Anmelder: AMX Automation Technologies GmbH, 4040 Linz (AT)
(72) Erfinder: Schwaiger, Meinhard, 4040 Linz (AT); Berkmann, Ralph, 6973 Höchst (AT); Rümmele, Ewald, 6971 Hard (AT)
(74) Vertreter: Babeluk, Michael

(57) **Zusammenfassung**

Die Erfindung betrifft eine Schutzhülle (10) für Objekte, insbesondere zum Schutz von Fahrzeugen (7) gegen Beschädigungen, wobei die Schutzhülle (10) im Wesentlichen mindestens zwei am Rand miteinander druckdicht verbundene Schichten, vorzugsweise eine Deckschicht (1a) und eine Auflageschicht (1b), aus luftundurchlässigem Material aufweist, welche im druckbeaufschlagten Zustand im Wesentlichen parallel übereinander angeordnet sind. Um eine rasche Installation am Fahrzeug zu ermöglichen, ist vorgesehen, dass die rollbar ausgebildete Schutzhülle (10) mindestens ein, vorzugsweise mindestens zwei vorzugsweise integrierte Befestigungsbänder (8) aufweist, deren Länge zumindest der Länge der Schutzhülle (10) entspricht und die zusammen mit der Schutzhülle (10) so einrollbar sind, dass durch Ziehen in Entrollrichtung (9) die Schutzhülle (10) sehr rasch über das zu schützende Objekt entrollt werden kann.

## Beschreibung

Die Erfindung betrifft eine Schutzhülle für Objekte, insbesondere zum Schutz von Fahrzeugen gegen Beschädigungen, wobei die Schutzhülle im Wesentlichen mindestens zwei am Rand miteinander druckdicht verbundene Schichten, vorzugsweise eine Deckschicht und eine Auflageschicht, aus luftundurchlässigem Material aufweist, welche im druckbeaufschlagten Zustand im Wesentlichen parallel übereinander angeordnet sind.

Dem Stand der Technik entsprechend existieren verschiedentlich spezielle Planen, Überzüge und Pelerinen aus Kunststofffolien, Gewebematerial mit Kunststoffbeschichtung oder Kombinationsfolien aus einem weichen Auflagematerial und einer Wasser abweisenden Decklage, versehen mit speziellen Befestigungselementen, die über das zu schützende Fahrzeug gestülpt und befestigt werden. Aufgrund der geringen Dicken derartiger Schutzhüllen ist nur ein sehr begrenzter Schutz gegen z.B. Hagelschlag gegeben. Die Schutzwirkung ist zumeist nur auf Regen und Sonneneinstrahlung begrenzt. Deshalb wird von den Herstellern derartiger Schutzhüllen auch keinerlei Garantie für einen zuverlässigen Schutz gegen Beschädigung des Fahrzeuges durch herab fliegende Gegenstände, wie z. B. Hagelkörner, abgegeben. Des Weiteren sind spezielle mit Luft befüllbare Vorrichtungen bekannt, die einen Schutz gegen Hagelschosse oder andere herumfliegende feste Gegenstände bilden, jedoch von der gegenständlichen Erfindung in wesentlichen Details abweichen:

Die US 6,415,832 A offenbart eine Schutzhülle, bestehend aus einem unteren und einem oberen Paneel, jeweils bestehend aus einer unteren und einer oberen Oberfläche sowie einer umlaufenden Kante. Über eine Vielzahl längs und quer angeordneter Linien, die eine Gitterstruktur beschreiben, ist das obere Panel mit dem unteren Paneel derart verbunden, dass eine Vielzahl diskreter Taschen gebildet wird. Mittels Schlaufen wird die Schutzhülle auf dem Fahrzeug befestigt. Der Nachteil dieser Konstruktion liegt darin, dass aufgrund der direkten Verbindung der beiden Paneele nur eine dünne Schutzhülle erzeugt werden kann, die deshalb auch nur einen begrenzten Schutz gegen Hagelschosse mit kleineren Dimensionen zulässt.

Die US 6,439,644 A offenbart eine Schutzvorrichtung für Fahrzeuge, Fahrzeuggruppen oder Häuser, bei welcher die Schutzwirkung mittels Luftdruck innerhalb des Hohlraumes der Schutzhülle erreicht wird, der mittels eines Luftgebläses aufgebaut wird. Mittels spezieller justierbarer Luftventile, die als Druckbegrenzungsventile aufgebaut sind, wird der Druck innerhalb der Schutzhülle auch während einer dynamischen Belastung konstant gehalten und mittels des permanent arbeitenden Luftgebläses, wird das nach einem Überduck entwichene Luftvolumen wieder nachgefüllt. Als wesentlicher Nachteil dieser Ausführungsvariante ist die Tatsache anzusehen, dass bei einer kurzzeitigen größeren Belastung, hervorgerufen durch eine größere Anzahl gleichzeitig einschlagender Hagelschoße, Systemluft entweicht und unter Umständen nicht rasch genug wieder nachgefüllt werden kann, weshalb die Schutzwirkung temporär nicht gewährleistet werden kann.

Die US 6,203,095 A offenbart eine Schutzvorrichtung, welche partiell mittels Magnethaftelementen auf die zu schützende Stelle eines Fahrzeuges aufgebracht werden kann. Die Schutzvorrichtung, bestehend aus einem dünnen Material, ist gegen Verschmutzung des zu schützenden Fahrzeugbereiches gedacht, bzw. wahlweise mit zusätzlich montierbaren, schlagfesten Elementen, welche in dafür vorgesehene Schlaufen gesteckt werden können, als Schutzvorrichtung gegen mechanische Belastungen aufrüstbar. Aufgrund der Bauart kann nur ein begrenzter Bereich des Fahrzeuges geschützt werden und die zusätzlich montierbaren schlagfesten Elemente weisen verhältnismäßig große Dimensionen auf, sodass insgesamt eine sperrige Schutzvorrichtung vorliegt, die bezogen auf den bescheidenen räumlichen Schutzbereich, große Packmasse aufweist und daher als Hagelschutz im Fahrzeug nicht mehr Platz sparend untergebracht werden kann.

Die US 6,241,303 A offenbart eine Schutzvorrichtung für Windschutzscheiben von Fahrzeugen gegen Witterungseinflüssen. Der Schutzumfang beschränkt sich räumlich auf die Windschutzscheibe und aufgrund der speziellen Bauart ist eine Schutzwirkung gegen herumfliegende harte Gegenstände oder Hagelschoße nicht gegeben.

Die US 6,044,881 A offenbart eine Schutzvorrichtung für Fahrzeuge gegen Beschädigungen durch Wettereinflüsse, bestehend aus einer einteiligen, aufblasbaren Hülle, die als ganze Einheit über das Fahrzeug zu stülpen ist. Zusätzlich können weitere aufblasbare Schläuche spiralförmig oder gekreuzt integriert sein. Nachteilig ist die bauartbedingte schwierige Montage auf dem Fahrzeug und die mangelnde Schutzwirkung in den dünneren Bereichen zwischen benachbarten aufblasbaren Schutzschläuchen.

Die US 6,056,347 A offenbart eine Schutzvorrichtung für Fahrzeuge gegen sämtliche Einwirkungen des Wetters, wie z. B. Hagel, Regen, Sonne und Schnee. Die Schutzvorrichtung besteht aus einer doppelwandigen, der Fahrzeugform angepassten Hülle, in die in definierten Abständen aufblasbare oder feste, röhrenartige Kammern (Formers, Abstandshalter) eingearbeitet sind und die mit speziellen Auflageelementen versehen ist, damit die Schutzhülle nur auf definierten Auflageflächen auf dem Fahrzeug aufliegt und eine Luftdurchflutung zwischen der Schutzhülle und dem Fahrzeug ermöglicht wird. Nachteilig wirken sich die großen Zwischenräume zwischen den benachbarten Abstandshaltern aus, weil in diesen Zwischenräumen nur eine begrenzte bzw. ungenügende Schutzwirkung gegen Hagelschlag o. ä. gegeben ist.

Die US 6,070,629 A offenbart eine Schutzvorrichtung für Fahrzeuge gegen Hagelschlag oder andere fallende Gegenstände, bestehend aus einer inneren und äußeren Deckschicht und einer Zwischenlage aus einer Luftpolsterschicht, mit einer Dicke von ca. 1,5 inches. Als besondere Nachteile dieser Ausführungsvariante sind anzusehen, dass die Schutzhülle permanent dieselbe Dicke aufweist und daher nicht Platz sparend zusammengelegt und verwahrt werden kann sowie das Fehlen einer Möglichkeit, die durch Diffusion aus den Luftkammern entweichende Luft nachzufüllen, sodass die Schutzwirkung, auch bei Nichtgebrauch der Schutzvorrichtung, stetig abnimmt. Weiters fehlt eine Angabe zum Druckniveau, sodass die Schutzwirkung nicht abgeschätzt werden kann.

Die US 5,890,525 A offenbart eine Schutzvorrichtung für Fahrzeuge, bestehend aus dicht aneinander gehefteten Luftkammern. Der Nachteil dieser Ausführungsvariante liegt in der Tatsache begründet, dass die einzelnen Luftkammern im druckbeaufschlagten Zustand einen annähernd kreisrunden Querschnitt aufweisen und daher die Schutzvorrichtung eine unterschiedliche Dicke aufweist; speziell in jenen Bereichen, wo zwei benachbarte Luftkammern mit kreisförmigem Querschnitt aneinandergefügt werden, weist die Schutzhülle eine für eine ausreichende Schutzwirkung zu geringe Dicke auf.

Die US 5,800,006 A offenbart eine Schutzvorrichtung für Fahrzeuge gegen Beschädigung durch Hagel bzw. andere frei fallende Gegenstände, wobei die Schutzvorrichtung aus einer mehrlagigen Hülle besteht. Die Schutzwirkung entsteht durch Weiterleitung der äußeren örtlichen Belastung auf die darunter befindlichen Stoßabsorbierenden Schichten. Der Nachteil ist durch die für die Schutzwirkung erforderliche Dicke gegeben, die ein kleines Packmaß, bei Nichtgebrauch, verhindert und das unverhältnismäßig hohe Gewicht.

Die US 5,653,492 A offenbart eine Schutzvorrichtung für Fahrzeuge bestehend aus drei stabilen Elementen, die mittels Reißverschlüssen zu einer garagenähnlichen Schutzvorrichtung zusammengesetzt werden, wobei die drei stabilen Elemente aus massiven Paneelen gefertigt sind. Bei Nichtgebrauch liegen sperrige, Elemente vor, die je nach Ausführungsvariante auch ein hohes Gewicht aufweisen können und nur außerhalb eines Fahrzeuges aufbewahrt werden können.

Die US 5,664,825 A offenbart eine Schutzvorrichtung für Fahrzeuge bestehend aus einer Vielzahl von Energieabsorbierenden Elementen, die dicht aneinandergereiht und in zwei flexiblen Deckschichten integriert sind, wobei die Querschnittsform dieser Elemente kreisförmig ist. Bedingt durch die vorgeschlagene Bauart weist die Schutzvorrichtung auch bei Nichtgebrauch dieselbe Dicke auf, weshalb eine Platzsparende Aufbewahrung im Fahrzeug nicht möglich ist. Ein weiterer Nachteil ist durch den kreisförmigen Querschnitt der Energieabsorbierenden Elemente gegeben, die nur eine ungleichmäßige Schutzwirkung, die an den Stoßstellen nahezu gegen Null geht, erlaubt.

Die AT 000 725 U1 offenbart eine Schutzmatte für Fahrzeuge, bestehend aus der Schutzmatte, einem speziellen Abgasfilter, einem Überdruckventil und einer Befestigungsschlaufe zur Befestigung der Matte am Seitenspiegel. Nachteilig wirkt sich bei diesem System der Grundaufbau der Matte aus, die ähnlich einer Luftmatratze aus zwei in Längsrichtung in mehreren Bahnen verschweißten Decklagen aufgebaut ist, und bei Druckbeaufschlagung wulstartige Kammern mit unterschiedlicher Dicke bildet, die eine unterschiedliche Schutzwirkung aufbauen und deren Breite bei Druckbeaufschlagung zusammenschrumpft.

Die US 5,287,904 A offenbart eine aufblasbare Schutzhülle für Fahrzeuge mit einem Baumwollgewebe als Auflage auf das Fahrzeug. Nachteilig ist die Bauart der Schutzhülle, die der Fahrzeugform exakt angepasst ist und daher nur schwer von einer Person in kurzer Zeit auf das Fahrzeug aufgebracht werden kann.

Die DE 94 02 268 U1 offenbart eine aufblasbare Schutzhülle für Fahrzeuge, die in eine Vielzahl innerer, miteinander verbundenen Luftkammern unterteilt ist und als Abdeckmatte oder Abdeckhaube ausgebildet ist und mit einer Gasflasche über ein Aufblasventil aufgeblasen wird. Als gravierende Nachteile werden hier zum einen das enorme Gefahrenpotential angesehen, welches von einer Gasbefüllung ausgeht, und zum anderen die ungleichmäßige Dicke und damit ungleichmäßige Schutzwirkung der Schutzhülle, bedingt durch den Grundaufbau aus miteinander verbundenen Luftkammern.

Die US 5,350,000 A offenbart eine aufblasbare Schutzvorrichtung für Fahrzeuge ausgebildet als Multi-Airbag, die über die Motorabgasleitung aufgeblasen wird. Nachteilig wirken sich bei diesem System die enorme Größenordnung der einzelnen Airbags aus, die bauartbedingt ungleichmäßige Dicken und damit eine ungleichmäßige Schutzwirkung aufweisen sowie die erforderliche Übergröße der Schutzvorrichtung, weil diese bei Druckbefüllung aufgebläht wird und in Längs- und Querrichtung zusammenschrumpft.

Die DE 43 16 504 A1 offenbart eine aufblasbare Schutzvorrichtung für Fahrzeuge, welche in mehrere miteinander verbundene Luftkammern unterteilt ist und mit einer Gaspatrone befüllt wird. Auch hier gelten dieselben Nachteile, wie für die DE 94 02 268 U1.

Die US 5,242,206 A offenbart eine aufblasbare Schutzhülle für Fahrzeuge, bestehend aus einer unteren und einer oberen Decklage, die am Umfang luftdicht verbunden sind, sowie in weiterer Folge zusätzliche Verbindungen der unteren und oberen Decklage miteinander am Umfang eine oder mehrere luftdichte Kammern bilden. Als Nachteil dieser Ausführungsvariante ist die unter Druckbeaufschlagung unterschiedliche Dicke der Schutzhülle, die eine unterschiedliche Schutzwirkung erzeugt, zu sehen.

Die DE 39 28 695 A1 offenbart eine Schutzvorrichtung für Fahrzeuge gegen Hagelschlag, die aus mindestens einem aufblasbaren Hohlkörper und flächigen Abdeckelementen besteht. Nachteilig wirken sich bei einem derartigen System aus, dass die Schutzwirkung ungleichmäßig ist und für eine ausreichende Schutzwirkung, die flächigen Abdeckelemente einer enormen Vorspannung unterworfen und mittels der aufblasbaren Hohlkörper in einem großen Abstand zur Fahrzeugoberfläche gehalten werden müssen. Dadurch bedingt sind hohe Systemdrücke und hohe Vorspannkräfte die wiederum relativ teure Materialien mit hohen Festigkeitseigenschaften bzw. große Wandstärken, und damit ein hohes Gewicht der Schutzvorrichtung, bedingen.

Die DE 36 29 426 A1 offenbart eine aufblasbare Schutzvorrichtung für Fahrzeuge die im Wesentlichen aus zwei übereinander liegenden luftdichten Planen besteht, die am Umfang luftdicht miteinander verbunden sind. Weiters sind die beiden Planen auf der Innenseite entlang in Form von Mäandern oder parallelen Streifen miteinander verschweißt, bzw. sind röhrenartige Hohlkörper, die entweder dicht aneinandergereiht oder in größeren Abständen zueinander angeordnet sind, eingebracht. Als Nachteil ist anzusehen, dass im aufgeblasenen Zustand eine Schutzhülle mit unterschiedlicher Dicke und unterschiedlicher Schutzwirkung entsteht.

Die US 4,294,483 A offenbart eine aufblasbare Schutzvorrichtung für Fahrzeuge bestehend aus mindestens einem aufblasbaren Element und einer dem Fahrzeug angepassten Form. Als Nachteile sind die Problematik der Aufbringung einer vorgeformten Schutzhülle und die ungleichmäßige Dicke eines aufgeblasenen Elementes (ungleichmäßige Schutzwirkung) zu nennen.

Die US 2002/0139408 A1 offenbart eine aufblasbare Schutzhülle für Autos und Flugzeuge sowie ein aufblasbares Zelt aus einer aufblasbaren Hülle. Sowohl die aufblasbare Schutzhülle als auch die aufblasbare Zelthülle bestehen aus zwei Schichten, die mittels senkrechter Innenwände derart verbunden sind, dass eine Vielzahl von Luftkammern gebildet wird, wobei sich in den Innenwänden Öffnungen befinden, die eine gleichmäßige Druckverteilung innerhalb der aufblasbaren Hülle ermöglichen. Die Unterteilung der Hülle mit Innenwänden in eine Vielzahl von Luftkammern führt zu enormen Nachteilen. Die Hüllenstärke (Höhe der Innenwände) ist mit 1 bis 15 cm definiert, der Abstand der senkrechten Innenwände zueinander in Breitenrichtung ist mit 2 bis 20 cm und in Längsrichtung mit 2 bis 30 cm definiert. Dies bedeutet, dass bei kleineren Abständen der Innenwände zueinander eine hohe Anzahl an Luftkammern gebildet wird, die Hülle bei einer Befüllung mit Luft eine einigermaßen gleichmäßige Dicke (nur geringe Wulstbildung) aufweist, jedoch aufgrund der hohen Anzahl an Innenwänden ein höheres Gewicht erreicht wird. Bei größeren Abständen der Innenwände zueinander entstehen größere Luftkammern und die Anzahl der Innenwände ist geringer, was zwar einen Gewichtsvorteil mit sich bringt, jedoch mit dem Nachteil einer ungleichmäßigen Hüllendicke (Wulstbildung) bei Luftbefüllung verbunden ist und zu einer ungleichmäßigen Schutzwirkung gegen heranfliegende Hagelkörner etc. führt. Ein weiterer Nachteil der offenbarten Schutzhülle resultiert aus der speziellen Formgebung der Schutzhülle, die eine dreidimensionale Form aufgrund der vorgeformten Eckenausbildung aufweist, und daher unter Windeinwirkung im Bedarfsfall nur sehr schwierig über das Fahrzeug aufgebracht werden kann. Die Druckverteilung im Inneren der Schutzhülle wird mittels der speziellen Öffnungen in den Innenwänden gewährleistet; dies hat jedoch den Nachteil zur Folge, dass größere Strömungswiderstände in der Luftströmung bei Befüllung zum Gebrauch bzw. bei Entleerung nach einem Gebrauch der Schutzhülle aufgebaut werden und deshalb ein rasches Befüllen bzw. Entleeren nicht möglich ist und damit ein längerer Zeitaufwand für Auf- und Abbau erforderlich ist. Bei Nichtgebrauch sollte die Schutzhülle auf ein möglichst kleines Packmaß zusammengelegt/gerollt werden können, wobei die Vielzahl der Innenwände, die ebenfalls ein Volumen aufweisen, das Packmaß vergrößern.

Die EP 1 213 172 A1 offenbart eine Schutzhülle für Fahrzeuge mit zwei druckdicht verbundenen Schichten aus luftdurchlässigem Material, welche im druckbeaufschlagten Zustand parallel übereinander angeordnet sind.

Aus der DE 36 29 426 A1 ist eine Schutzdecke für Fahrzeuge aus verschweißten Kunststoff-Folienbahnen bekannt. Zum Befüllen der Abdeckfolie wird ein Ersatzreifen oder ein kleiner Verdichter vorgeschlagen.

Bekannte Schutzhüllen werden in gefaltetem oder gerolltem Zustand aufbewahrt.

Im akuten Anwendungsfall, also etwa bei plötzlich auftretendem Hagel, muss die Schutzhülle möglichst rasch und einfach über das Fahrzeug gebracht und ausgebreitet werden können. Dies ist bei herkömmlichen Schutzhüllen allerdings nicht immer gewährleistet, insbesondere wenn die Schutzhülle von einer einzigen Person aufgebracht wird.

Aufgabe der gegenständlichen Erfindung ist es, eine Schutzhülle zu entwickeln, die bei Nichtgebrauch auf ein sehr geringes Packmaß zusammengelegt oder zusammengerollt werden kann und bei Bedarf, beispielsweise vor einem drohenden Hagelschauer, sehr rasch und einfach über das zu schützende Fahrzeug gebracht, ausgebreitet und mit Luft gefüllt werden kann.

Dies wird dadurch erreicht, dass die rollbar ausgebildete Schutzhülle mindestens ein, vorzugsweise mindestens zwei vorzugsweise integrierte Befestigungsbänder aufweist, deren Länge zumindest der Länge der Schutzhülle entspricht und die zusammen mit der Schutzhülle so einrollbar sind, dass durch Ziehen in Entrollrichtung die Schutzhülle sehr rasch über das zu schützende Objekt entrollt werden kann. Dadurch lässt sich ein schnelles Installieren der Schutzhülle zum Schutz vor drohender Beschädigung eines Gegenstandes ermöglichen. Die rollfähig ausgebildete Schutzhülle besteht aus einem speziellen doppelwandigen Material, welches an den Aussenkanten luftdicht verschlossen ist. Im Zwischenbereich zwischen den Lagen sind vorzugsweise elastische Abstandshalter vorgesehen, die nach Zuführung von Luft in die doppelwandige Schutzhülle eine gleichmäßige Dicke garantieren. Dadurch entsteht eine doppelwandige Schutzhülle, in deren Mittellage ein Luftpolster aufgebaut wird, damit auch bei größeren herab fliegenden Hagelschloßen durch Dämpfungswirkung die kinetische Energie auf eine unkritische Restgröße abgebaut werden kann und durch Verteilung der örtlichen Druckbelastung auf einen größeren Flächenanteil die verbleibende lokale Druckbelastung auf dem Fahrzeug keine bleibenden Schäden verursachen kann. Die Luftzufuhr kann mittels einer speziellen, in die Schutzhülle integrierten manuell betätigten Luftpumpe, ähnlich einem Blasebalg, oder mittels einer elektrisch betriebenen Pumpe erfolgen. Eine rasche Befüllung mit Luft ist von enormer Bedeutung, da die Schutzhülle bei Bedarf möglichst sofort einen Schutz gegen Hagelschlag bieten können muss. Weiters ist es wichtig, dass nach Beendigung des Hagelschauers die Luftfüllung ebenfalls sehr rasch wieder entleert und die Schutzhülle selbst sehr rasch wieder entfernt und auf ein kleines Packmaß zusammengelegt oder zusammengerollt werden kann. Dazu sind großflächige Ventile oder druckdichte Reißverschlüsse vorgesehen.

Ein einfaches Manövrieren eines mit einer Schutzhülle versehenen Fahrzeuges ist möglich, wenn die Schutzhülle mit zumindest einem Sichtfenster versehen ist, welches dem Fahrer eine Sicht aus dem Fahrzeug heraus ermöglicht, wobei vorzugsweise vorgesehen ist, dass zumindest ein Seitenteil der Schutzhülle derart ausgeführt ist, dass ein Zugang in das Fahrzeug oder ein Verlassen des Fahrzeuges bei geschlossener Schutzhülle ermöglicht wird.

Die Schutzhülle ist so ausgebildet, dass die Schutzwirkung auf einem Abbau kinetischer Energie des herab fliegenden Hagelkornes bzw. Gegenstandes und einer Druckverteilung auf eine größere Fläche beruht, wobei mittels der Luftpolster in der Schutzhülle ein Widerstand entgegengesetzt wird. Durch den speziellen Aufbau ist die Schutzhülle in besonderer Weise Stoß abweisend, weist ein hohes Dämpfungsvermögen auf und ermöglicht eine Verteilung einer Druckbelastung von außen auf eine größere Fläche, sodass wertvolle Gegenstände, insbesondere Fahrzeuge wie PKW, Motorräder und Wohnwagen gegen während eines Unwetters im freien Fall herabfallende Gegenstände wie z. B. Hagelkörner (Hagelschloße) in üblicher Größenordnung (Durchmesser bis ca. 50 mm), Steine, Äste, usw. derart geschützt werden können, dass bleibende bzw. sichtbare Schäden weitestgehend verhindert werden können. Diese Schutzhülle ist bei Nichtgebrauch auf ein sehr kleines, unkritisches Packmaß zusammenlegbar und kann daher ohne wesentliche Beeinträchtigung des Stauraumes im Fahrzeug permanent mitgenommen werden. Weiters zeichnet sich die Schutzhülle durch ein geringes Gewicht aus und kann bei Bedarf sehr rasch auf das Fahrzeug aufgebracht, befestigt und mit Luft aufgeblasen werden. Großflächige, luftdicht verschließbare Öffnungen erlauben nach einem Einsatz ein rasches Entleeren des Luftvolumens.

In einer weiteren Ausführungsvariante besteht die Schutzhülle aus zumindest drei Schichten, die mittels elastischer Abstandshalter verbunden sind und zumindest zwei mit Luft befüllbare Luftkammern ausbilden. Zwischen der Deckschicht und der Auflageschicht ist zumindest eine Zwischenschicht, vorzugsweise aus luftundurchlässigem Material, angeordnet. Die beiden Luftkammern können mit unterschiedlichen Drücken beaufschlagt werden. Dadurch kann - bei im wesentlichen gleicher Dicke der Schutzhülle - eine erhöhte Schutzwirkung gegen heranfliegende Gegenstände erzielt werden.

Die Erfindung wird anhand der Figuren näher beschrieben. Es zeigen:
- Fig. 1: die erfindungsgemäße Schutzhülle zur Anwendung an einem Fahrzeug in einer Schrägansicht;
- Fig. 2: ein Detail der Schutzhülle in einer ersten Ausführungsvariante im aufgeblasenen Zustand;
- Fig. 3: ein Detail dieser Schutzhülle im drucklosen Zustand;
- Fig. 4: die Schutzhülle während eines Entrollvorganges;
- Fig. 5: die Schutzhülle während eines Entrollvorganges auf einem Fahrzeug;
- Fig. 6: die Schutzhülle im ausgebreiteten Zustand; und
- Fig. 7: ein Detail der Schutzhülle in einer zweiten Ausführungsvariante.

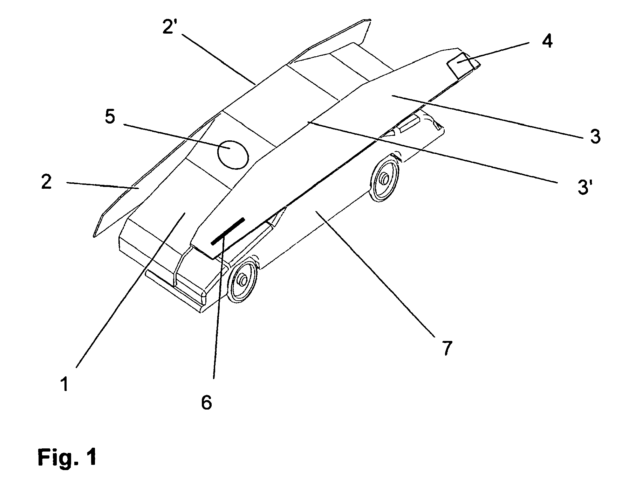

Wie aus der in Fig. 1 dargestellten Gesamtansicht einer Ausführungsvariante der erfindungsgemäßen Schutzhülle 10 hervorgeht, besteht die Schutzhülle 10 aus dem Mittelteil 1, den beiden Seitenteilen 2 und 3, den Verbindungsbereichen 2' und 3', einer optionalen Sichtfläche 5, dem zur Schnellentlüftung vorgesehenen integrierten, druckdichten Reißverschluss 6 und dem integrierten Blasebalg 4. Die Schutzhülle 10 wird über das zu schützende Fahrzeug 7 gestülpt und mittels hier nicht näher dargestellter Befestigungselemente am Fahrzeug 7 befestigt.

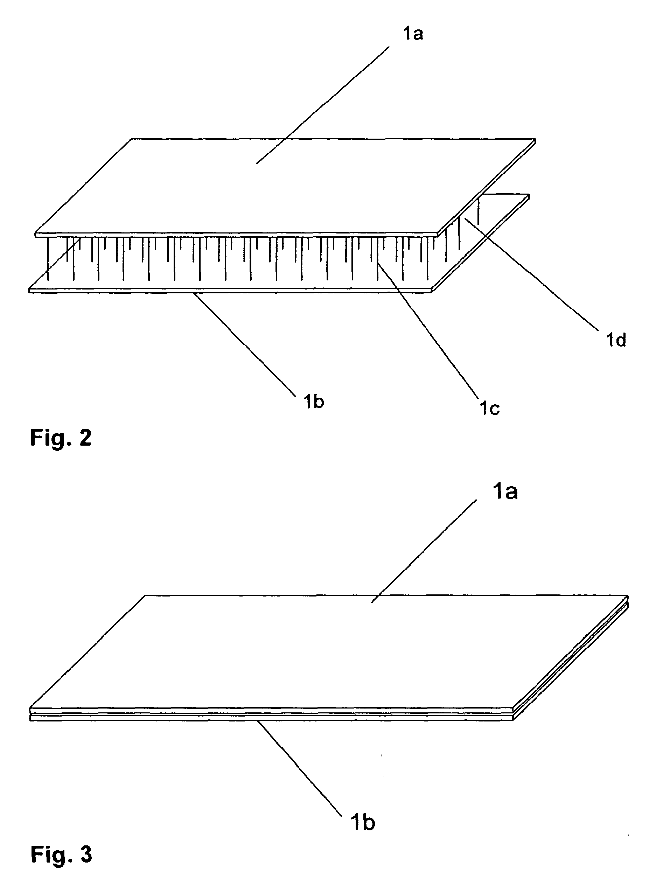

Fig. 2 zeigt den Grundaufbau der erfindungsgemäßen Schutzhülle 10 im aufgeblasenen Zustand, bestehend aus der äußeren Deckschicht 1a, der Auflageschicht 1b, den biegeweichen Abstandshaltern 1c und der Luftkammer 1d. Damit ein Überdruck im Inneren der Schutzhülle 10 aufgebaut werden kann, sind die äußere Deckschicht 1a und die Auflageschicht 1b am Außenrand umlaufend druckdicht miteinander verbunden. Im aufgeblasenen Zustand beträgt die Dicke der Schutzhülle ca. 25 - 100 mm vorzugsweise 50 - 75 mm. Der Überdruck beträgt vorzugsweise ca. 0,5 bar bis 1,5 bar.

Fig. 3 zeigt die Schutzhülle 10 im drucklosen Zustand, sodass die äußere Deckschicht 1a direkt auf der Auflageschicht 1b zu liegen kommt und die gesamte Schutzhülle 10 auf kleinsten Raum zusammenlegbar ist. Die Dicke der Schutzhülle 10 im drucklosen Zustand beträgt ca. 0,6 bis 1,5 mm.

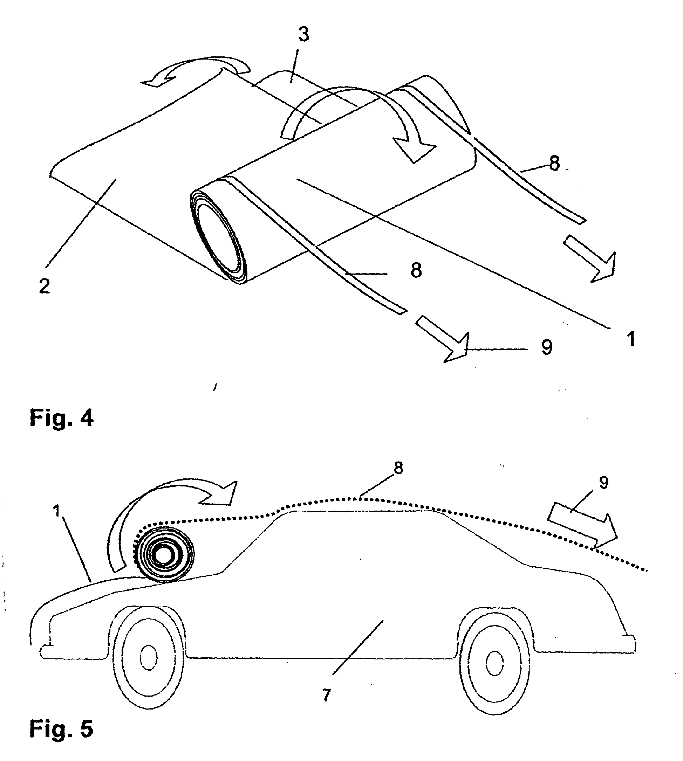

Fig. 4 zeigt eine bevorzugte Ausführungsvariante einer Schutzvorrichtung 10, die bei Nichtgebrauch zu einer handlichen Rolle zusammengerollt wird und bei der während des Einrollvorganges zwei Befestigungsbänder 8 mit eingerollt werden.

Fig. 5 zeigt eine bevorzugte Ausführungsvariante einer Schutzvorrichtung, wie diese im Bedarfsfall mit Befestigungselementen an der Vorder- oder Hinterseite des Fahrzeuges 7 befestigt und mittels Handzug in Entrollrichtung 9 an den beiden Befestigungsbändern 8 über das Fahrzeug 7 entrollt wird. Nachdem eine erste Befestigung dieses entrollten Streifens vorgenommen wurde, können die beiden Seitenteile 2, 3 jeweils nach unten geklappt und mittels spezieller Spannelemente (z. B. Klettverschluss, Haken und Ösen) fixiert werden. Erst dann wird eine Befüllung mit Luft mittels des integrierten Blasebalges 4 oder eines elektrisch betätigten Gebläses vorgenommen.

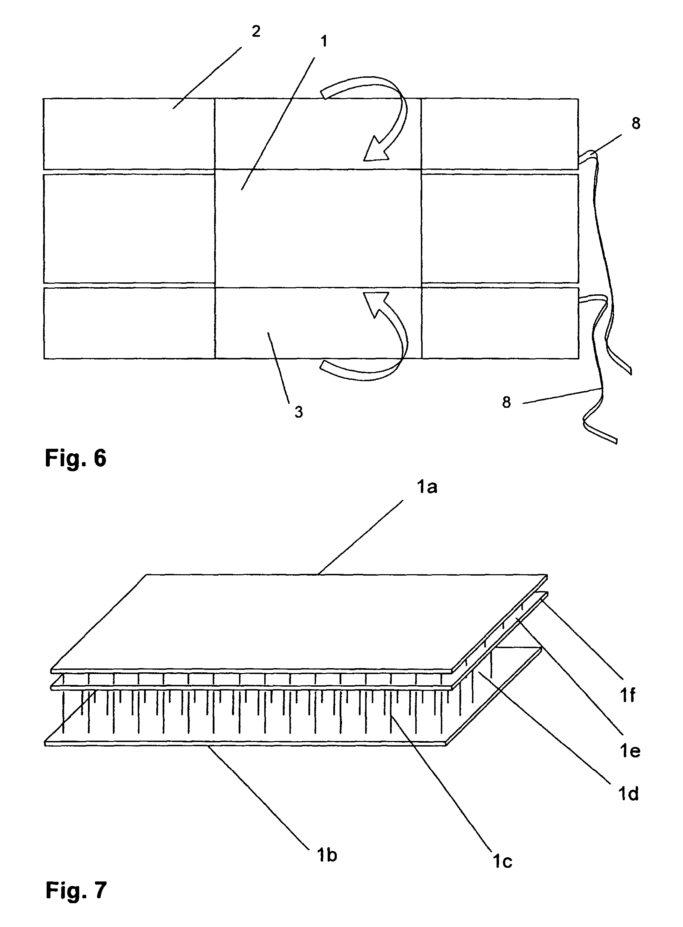

Fig. 6 zeigt die Schutzvorrichtung 10 im ausgebreiteten Zustand, dabei sind der Mittelteil 1, die beiden Seitenteile 2, und 3 sowie die Befestigungsbänder 8 dargestellt.

Fig. 7 zeigt eine weitere Variante der Schutzhülle 10 im aufgeblasenen Zustand, bestehend aus der äußeren Deckschicht 1a, der Auflageschicht 1b, den biegeweichen Abstandshaltern 1c, der ersten Luftkammer 1d, der zweiten Luftkammer 1e und der Zwischenschicht 1f. Bei dieser zwei Luftkammern 1d, 1e aufweisenden Schutzhülle 10 sind zwei unterschiedlich große Abstände zwischen den Schichten 1a, 1b, 1f und verschiedene Drücke in den Luftkammern 1d, 1e vorgesehen. Die äußere Deckschicht 1a weist eine Dicke von ca. 10 - 30% der Gesamtdicke der Schutzhülle 10 auf. Die an die Deckschicht 1a grenzende äußere zweite Luftkammer 1e wird mit einem etwa doppelt so hohen Druck wie die an die Auflageschutzschicht 1b grenzende innere erste Luftkammer 1d beaufschlagt. Damit wird bei gleicher Gesamtdicke der Schutzhülle 10 wie in Fig. 2 eine wesentlich höhere Schutzwirkung gegen heranfliegende Gegenstände erreicht. Dabei wird die höhere Steifigkeit der Deckschicht 1a ausgenützt, die sich aus dem höheren Innendruck in der zweiten Luftkammer 1e ergibt. Aufgrund der geringeren Dicke der äußeren zweiten Luftkammer 1e gegenüber der inneren ersten Luftkammer 1d ist selbst bei dem höherem Innendruck eine geringere Belastung der äußeren Schutzhülle (Folie) gegeben.

In einer ersten Ausführungsvariante besteht die Schutzhülle 10 aus einem doppelwandigen Folienkörper, der mit Abstandshaltern 1c versehen ist und am Außenrand umlaufend druckdicht verschlossen ist. Diese universelle Schutzhülle 10 hat einen annähernd rechteckigen Querschnitt und wird im drucklosen Zustand auf das zu schützende Fahrzeug 7 gebracht und befestigt. Anschließend wird der Hohlraum zwischen den beiden Folienwänden mit Luft befüllt, sodass eine gleichmäßige Dicke entsteht. Für die Luftbefüllung ist eine integrierte, manuell zu betätigende Luftpumpe 4 oder ein elektrisch betriebenes Gebläse vorgesehen. Nach Gebrauch entweicht die Luft durch großflächige, druckdicht verschließbare Öffnungen, wie z. B. Reißverschlüsse 6.

In einer bevorzugten Ausführungsvariante ist die Schutzhülle 10 auf die dreidimensionale geometrische Form des Fahrzeuges 7 abgestimmt. Die Schutzhülle 10 besteht aus einem Mittelteil 1 und zwei mit dem Mittelteil direkt verbundenen Seitenteilen 2, 3. Im mit Luft gefüllten Zustand ist die Dicke des Mittelteiles 1 größer als die Dicke der Seitenteile 2, 3, abgestimmt auf die bevorzugte Einschlagrichtung der Hagelkörner. Für die unterschiedlichen Fahrzeugtypen und Fahrzeuggrößen sind standardisierte Größen und Ausführungsformen vorgesehen.

## Patentansprüche

1. Schutzhülle (10) für Objekte, insbesondere zum Schutz von Fahrzeugen (7) gegen Beschädigungen, wobei die Schutzhülle (10) im Wesentlichen mindestens zwei am Rand miteinander druckdicht verbundene Schichten, vorzugsweise eine Deckschicht (1a) und eine Auflageschicht (1b), aus luftundurchlässigem Material aufweist, welche im druckbeaufschlagten Zustand im Wesentlichen parallel übereinander angeordnet sind, **dadurch gekennzeichnet, dass** die rollbar ausgebildete Schutzhülle (10) mindestens ein, vorzugsweise mindestens zwei vorzugsweise integrierte Befestigungsbänder (8) aufweist, deren Länge zumindest der Länge der Schutzhülle (10) entspricht und die zusammen mit der Schutzhülle (10) so einrollbar sind, dass durch Ziehen in Entrollrichtung (9) die Schutzhülle (10) sehr rasch über das zu schützende Objekt entrollt werden kann.

2. Schutzhülle (10) nach Anspruch 1, **dadurch gekennzeichnet, dass** in die Schutzhülle (10) eine Schnellbefülleinrichtung integriert ist, welche vorzugsweise durch eine Luftpumpe (4) gebildet ist.

3. Schutzhülle (10) nach Anspruch 1 oder 2, **dadurch gekennzeichnet, dass** die Schutzhülle (10) zumindest eine Schnellentleereinrichtung aufweist, welche vorzugsweise aus einem integrierten luftdichten Reißverschluss (6) oder einem großflächigen Ventil besteht.

4. Schutzhülle (10) nach einem der Ansprüche 1 bis 3, **dadurch gekennzeichnet, dass** zwischen den beiden Schichten (1a, 1b) vorzugsweise elastische Abstandshalter (1c) integriert sind, die der Schutzhülle (10) im Luft gefüllten Zustand zumindest in großflächigen Abschnitten eine gleichmäßige Dicke verleihen.

5. Schutzhülle (10) nach einem der Ansprüche 1 bis 4, **dadurch gekennzeichnet, dass** die Schutzhülle (10) aus einem Mittelteil (1) und zumindest einem, vorzugsweise zwei mit dem Mittelteil (1) verbundenen Seitenteilen (2, 3) besteht.

6. Schutzhülle (10) nach Anspruch 5, **dadurch gekennzeichnet, dass** die Dicken des Mittelteils (1) und des Seitenteiles (2, 3) im Luft gefüllten Zustand unterschiedlich sind, abgestimmt auf die bevorzugte Einschlagrichtung und Energie der Hagelkörner bzw. Gegenstände.

7. Schutzhülle (10) nach einem der Ansprüche 1 bis 6; **dadurch gekennzeichnet, dass** die Schutzhülle (10) ohne Luftbefüllung auch als Sonnenschutz oder als Staubschutz für das Objekt verwendbar ist.

8. Schutzhülle (10) nach einem der Ansprüche 1 bis 7, **dadurch gekennzeichnet, dass** die Schutzhülle (10) mit zumindest einem Sichtfenster (5) versehen ist, welches dem Fahrer eine Sicht aus dem Fahrzeug (7) heraus ermöglicht.

9. Schutzhülle (10) nach einem der Ansprüche 1 bis 8, **dadurch gekennzeichnet, dass** die Schutzhülle (10) mit Befestigungselementen versehen ist, die ein rasches Befestigen der Schutzhülle (10) auf dem Objekt, selbst bei Windbelastung, ermöglichen.

10. Schutzhülle (10) nach einem der Ansprüche 1 bis 9, **dadurch gekennzeichnet, dass** zumindest ein Seitenteil (2, 3) der Schutzhülle (10) derart ausgeführt ist, dass ein Zugang in das Fahrzeug (7) oder ein Verlassen des Fahrzeuges (7) bei geschlossener Schutzhülle (10) ermöglicht wird.

11. Schutzhülle (10) nach einem der Ansprüche 1 bis 10, **dadurch gekennzeichnet, dass** bei Nichtgebrauch die Schutzhülle (10) auf ein sehr geringes Packmaß zusammengelegt werden kann und im Fahrzeug (7) ohne wesentliche Beeinträchtigung des Stauraumes ständig mitgenommen werden kann.

12. Schutzhülle (10) nach einem der Ansprüche 1 bis 11, **dadurch gekennzeichnet, dass** bei Nichtgebrauch die Schutzhülle (10) zu einem handlichen Paket zusammengerollt und/oder -gelegt werden kann.

13. Schutzhülle (10) nach einem der Ansprüche 1 bis 12, **dadurch gekennzeichnet, dass** die Schutzhülle aus zumindest drei Schichten (1a, 1b, 1f) besteht, die mittels elastischer Abstandshalter (1c) verbunden sind und zumindest zwei mit Luft befüllbare Luftkammern (1d, 1e) ausbilden.

14. Schutzhülle (10) nach einem der Ansprüche 1 bis 13, **dadurch gekennzeichnet, dass** zwischen der Deckschicht (1a) und der Auflageschicht (1b) zumindest eine Zwischenschicht (1f), vorzugsweise aus luftundurchlässigem Material, angeordnet ist.

15. Schutzhülle (10) nach Anspruch 13 oder 14, **dadurch gekennzeichnet, dass** die Luftkammern (1d, 1e) mit unterschiedlichen Drücken beaufschlagbar sind.
